# EUROPEAN PATENT SPECIFICATION

(11) **EP 3 423 222 B1**
(45) Date of publication and mention of the grant of the patent: **07.06.2023**
(21) Application number: 17713779.1
(22) Date of filing: 28.02.2017
(51) Int. Cl.: B23B 13/08, B23B 13/12

(54) **RADIAL CENTERING DEVICE FOR BAR LOADERS IN AUTOMATIC LATHES**
RADIALE ZENTRIERVORRICHTUNG FÜR STANGENLADEMAGAZIN IN DREHAUTOMATEN
DISPOSITIF DE CENTRAGE RADIAL POUR CHARGEURS DE BARRES DANS DES TOURS AUTOMATIQUES

(30) Priority: 02.03.2016 IT UB20161227
(43) Date of publication of application: 09.01.2019
(73) Proprietor: Drehmag S.r.l., 20030 Senago (MI) (IT)
(72) Inventor: PIROLA, Daniele, I-20144 Milano (IT)
(74) Representative: Lampis, Marco
(86) International application number: PCT/IB2017/051159
(87) International publication number: WO 2017/149446

(56) References cited:
- EP-A1- 1 669 145
- CH-A5- 647 968
- JP-A- 2002 283 104
- JP-A- 2011 255 460
- KR-A- 20140 120 067
- US-A1- 2010 139 462

## Description

The present invention relates to a centering device according to the preamble of claim 1 of the type used in bar loaders for automatic lathes. The invention also relates to an automatic loader with such a centering device.

In the technical sector of bar loaders for single-spindle or multiple-spindle lathes it is known that there exists the need to reduce at least in one point the oscillating range of the bar so as to facilitate the machining thereof.

In an automatic lathe-loader system, in fact, the bar to be machined is generally supported at one end by the lathe gripper and at the other end by the loader gripper, while along its entire length it is free to oscillate inside the loader channel and inside the lathe spindle tube.

In many cases, in particular in the case of bars which have a small diameter compared to the diameter of the loader through which the bar passes, the oscillation of the bar due to the high speeds of rotation and/or the fact that it is not perfectly straight may make machining very difficult, because of the vibrations generated on the workpiece, or feeding of the bar may even be made impossible, with the consequent production of a part which is too short and defective.

The introduction of a further point for centering and supporting the bar in an intermediate zone along the bar tends to make the bar much more stable, with obvious advantages in terms of machining quality and speed.

For this purpose, the loaders are provided with a device (generally known as "centering device") for supporting and centering the bar, which is generally positioned close to the point where the bar passes between loader and lathe spindle.

The use of the centering device therefore results firstly in greater productivity of the lathe (since a higher speed means a greater number of parts produced), but also in a longer working life of the loader/lathe assembly, since stabilization of the bar always results in a reduction of the vibrations and therefore also a reduction in the stresses on all the elements which contain the rapidly rotating bar.

The ideal position of the centering device is immediately behind the lathe spindle and therefore in front of the loader. It is this position, in fact, where the beneficial effects of a reduction in the oscillating range of the bar are most evident.

The problem of using a centering device is that the diameter of the channel inside the centering device for allowing the bar to pass through must be as small as possible in relation to the diameter of the bar, so as to leave minimum lateral play between bar and channel, in order to reduce the lateral oscillations of the bar. At the same time, however, with a shortening of the bar, the centering device must be able to allow the bar pusher of the loader with its gripper holding the tail end of the bar to pass through. The bar pusher, in fact, has a diameter which is always greater than the diameter of the bar itself and would therefore be prevented from passing through by the constriction represented by the centering device when, during its travel movement for feeding the lathe, it arrives in the vicinity of the centering device itself.

Centering devices with a variable-control diameter have therefore been proposed.

For example, EP0826451 describes a centering device composed of a cage structure with a plurality of parallel bars connected in a articulated manner between two torsion rings coaxial with each other. Rotating the rings in opposite directions causes the inclination of the bars and the narrowing or widening of the axial passage between them. This structure, however, is relatively complicated and may form only a very short containing channel, essentially consisting merely of a circumferential set of points. This is not optimal for reducing the lateral vibrations and may also often result in damage to the surfaces of the bar.

Document JP 2002 283104 A discloses a centering device according to the preamble of claim 1.

EP 1669145 describes a centering device provided with jaws which are pivotably mounted so as to rotate elastically outwards, against the action of a spring, when the bar pusher passes inside the centering device. In order to prevent the transverse vibrations of the bar being guided from producing an undesirable opening movement of the jaws, the jaws are usually axially retracted inside a containing element so that when the bar pusher encounters the jaws it pushes them firstly outside of the containing element and can then rotate them outwards by means of pushing against the inclined surfaces of the said jaws. With such a system the movement of the jaws however cannot be really controlled, the centering device is suitable for holding with precision a single bar diameter, the bar pusher is not suitably guided when it passes through the centering device and the bars may be held laterally only over a very short section if an excessive lateral volume of the centering device is to be avoided when the bar pusher passes between the jaws, owing to the splayed opening of the said jaws.

Moreover, it is difficult to change the pivotably mounted jaws in order to adapt the centering device to bars with a different diameter and/or cross-sectional form.

Another problem of the centering devices is that a high degree of friction may be generated between the wall of the channel of the centering device and the bar, with consequent rapid wear both of the retaining material of the centering device and the surface of the said bar. This is particularly so in the case of shaped bars, for example with a hexagonal or square cross-section.

In an attempt to solve this problem the centering devices are generally designed so as to be freely rotatable about the axis of the bar. However, a certain amount of wear of the parts which form the channel may always occur and periodic replacement of these parts is required. Usually the replacement however requires a long downtime of the loader in order to be able to disassemble the centering device and remove the worn parts.

For example, in the aforementioned patent EP0826451 changing the parts which are worn is complicated and costly, because it involves the replacement of the rods which form the cage of the centering device, which wear at a single point where contact with the bar occurs. EP 1669145 is also complicated to disassemble in order to replace the worn jaws.

Basically, the complex nature of the operation of replacing the retaining parts in the known centering devices is such that maintenance or even only a change in format of the bars is in any case difficult and costly.

For various reasons, it is also difficult to employ the known centering devices for bars which have a diameter bigger than two thirds of the channel of the loader. For example, in the case of bars which have a large diameter and therefore are subject to major vibrations and radial thrusts, the known loaders are not strong enough to hold them.

There are, however, cases where it would be necessary to support also a bar which has a relatively large diameter compared to the channel of the loader. A typical example is that of a hexagonal socket bar with a diameter similar to the diameter of the loader channel, the oscillations of which, even if limited in nature, will greatly stress the lathe gripper and its resistance such that errors in the machining precision or the length of the part occur (for example in the case of deep frontal boreholes). In this case it would be of great help to adopt a stronger and more resistant loader which is able to accommodate bars of this size, while ensuring a reliable solution to the problem.

The general object of the present invention is to overcome the problems of the prior art, by providing a centering device which is able to provide satisfactory control of the size of the guide channel, is easy to assemble and disassemble for replacement of the bar holding parts and which is strong enough to hold also bars with a relatively large diameter.

In view of this object the invention provides a centering device according to claim 1, intended to be used in an automatic bar loader for a lathe, comprising a channel with a rectilinear axis intended for the passage of a bar from the loader to the lathe and with an inlet end for the bar and an opposite outlet end allowing the bar to exit towards the lathe, comprising mobile jaws on the sides of the channel for defining an adjustable through-aperture in the channel, characterized in that the jaws are mounted in a supporting slider so as to be slidable in the supporting slider radially relative to the channel and the supporting slider is slidable along the channel against the action of elastic means in response to a thrust on the jaws towards said outlet end, so as to move between a first position closer to the inlet end, in which the jaws are in a first position projecting into the channel with their operative surfaces, and a second position closer to the outlet end, in which the jaws can slide inside the support slider so as to move radially away from said first position projecting into the channel.

An automatic loader with such a centering device is defined in claim 11. In order to illustrate more clearly the present invention and its advantages compared to the prior art, an example of embodiment applying the invention will be described below with the aid of the accompanying drawings. In the drawings:
- Figure 1 shows a schematic cross-sectional view of a centering device according to the invention;
- Figure 2 shows a cross-section along the line II-II of Figure 1;
- Figures 3 and 4 are schematic, exploded, perspective views of parts of the centering device according to Figure 1;
- Figure 5 shows a schematic, exploded, perspective view of a main part of the centering device according to the invention;
- Figure 6 shows a perspective view of a centering device according to the invention during a disassembly step;
- Figures 7 and 8 show in schematic form a loader for feeding bars to a lathe and using the centering device according to the invention;
- Figures 9, 10 and 11 are schematic and partial views of the centering device during use.

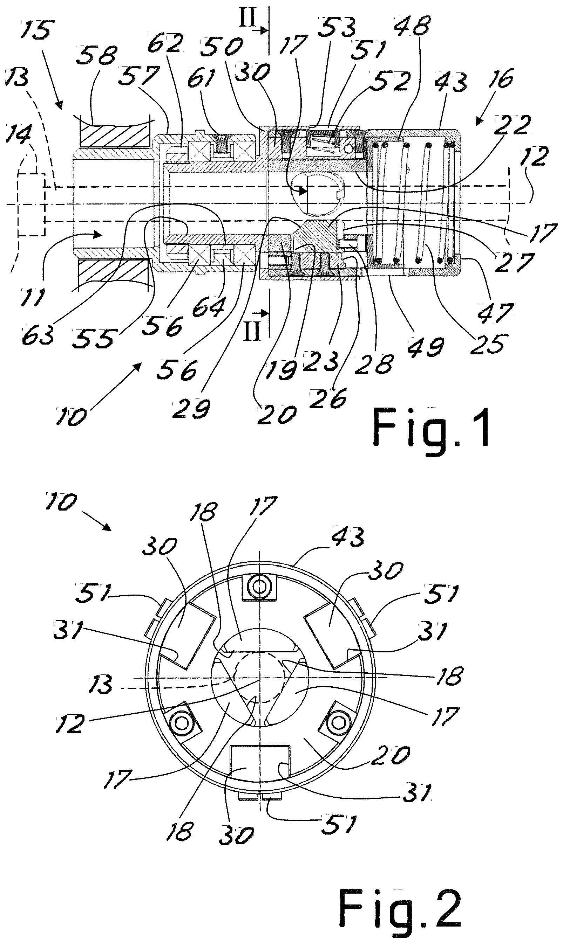

With reference to the figures, Figure 1 shows in schematic form a supporting and centering device (referred to below in short simply as "centering device"), denoted generally by 10 and realized in accordance with the invention. The centering device is intended to be used in a bar loader for an automatic lathe so as to guide the transfer of a bar from the loader to the lathe spindle.

Below, the terms "front" and "rear" will in general refer to the direction of movement of the bar from the loader to the lathe (from left to right in Figure 1), unless otherwise specified.

The centering device 10 comprises a channel 11 with a rectilinear axis 12 which is intended for the passage, from the loader to the lathe, of a bar 13 which is supported at its rear end by the gripper of a bar pusher 14 of the loader (known per se) so as to enter from one end 15 of the centering device which is the inlet end for the bar. The opposite front end (not shown) of the bar, after passing through the centering device 10 and exiting from an opposite end 16 of the centering device, is fed to the lathe for machining. The channel 11 is obviously suitable for allowing the bar pusher to pass through.

Between inlet and outlet, the centering device comprises jaws 17 which (as schematically shown also in Figure 2) are arranged radially on the sides of the channel 11 so as to define an adjustable through-aperture in the said channel through which the bar 13 passes so that it is laterally retained and lateral oscillations and deviations thereof are reduced.

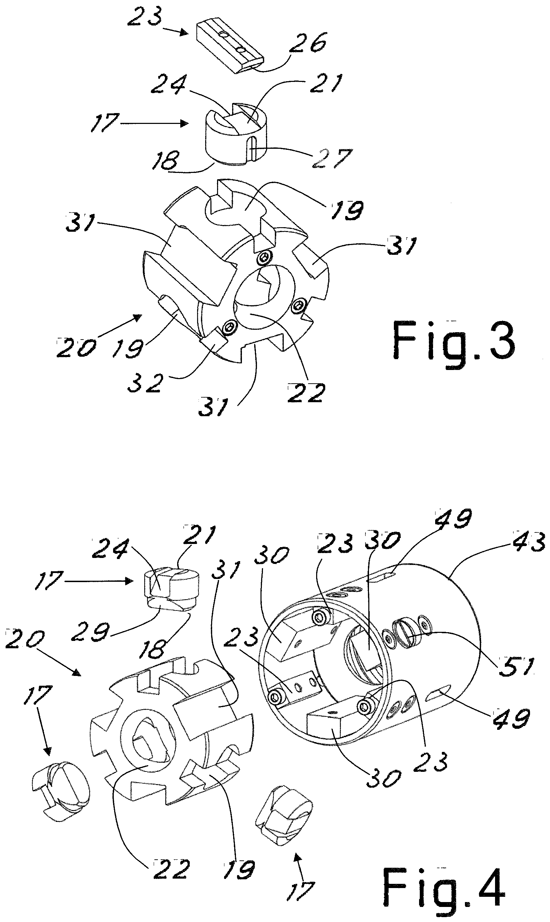

As can be seen also in the exploded view of Figure 3, the jaws 17 are mounted so as to slide radially inside respective sliding seats 19 which are formed in a supporting slider 20 which is provided with an axial hole so as to surround the channel 11 with an axial passage 22 which forms substantially part of the channel 11. The diameter of the passage 22 is also such as to allow the centering device to be passed through both by the bar and by the bar pusher. The passage may therefore also have a diameter for example equal to or greater than the diameter of the loader channel. In particular, the channel 11 and the passage 22 may have the same diameter, as can be clearly seen in Figure 1.

The slider 20 is in turn axially slidable inside the centering device, advantageously against the action of the elastic thrust means, preferably consisting of a spring 25. The spring may be advantageously arranged coaxial with the axis 12 of the channel.

Preferably the jaws have a generally cylindrical form in the sliding direction and the seats 19, which pass through the slider, are correspondingly cylindrical.

In the embodiment shown by way of example the jaws are preferably three in number, arranged at 120° around the axis 12 of the centering device.

Each jaw 17 has a head end with a first operative surface 18 which is directed towards the axis of the centering device and which projects into the channel and a second opposite actuating surface 21 which faces radially towards the outside of the supporting slider.

The operative surface 18 forms the surface for contact with the bar which passes through the centering device, while the opposite actuating surface 21 is intended to slide along corresponding retaining surfaces or cams 23 during the axial movement of the slider 20 so as to move from a zone where the jaws are obliged to project into the channel and not be able to be retracted beyond a first predefined radial position, and a second zone, closer to the outlet end, where the jaws are able to slide outwards in their own seat inside the supporting slider so as to move radially away from the first radial position projecting into the channel. The first position will correspond to the position for retaining the bar which passes through the channel, as will be clarified below.

The cams 23 are advantageously fixed (for example by means of screws) on the inner wall of a cylindrical housing 43 of the centering device which slidably contains the supporting slider 20.

The cams may be advantageously slidable received inside longitudinal grooves 32 in the slider 20.

With the elastic means realized by means of a spring 25 arranged coaxial around the channel for passage of the bar it has been found to be advantageous to design the housing 43 with a peripheral edge 47 which is directed towards the axis 12 in the proximity of the outlet end 16 and on which a first end of the spring 25 rests.

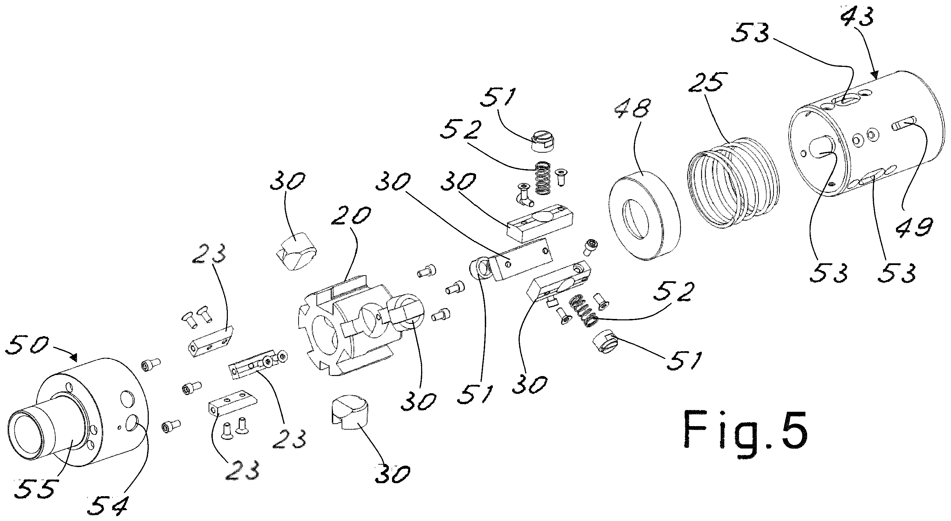

As can be clearly seen in Figures 1 and 5, the housing may also contain advantageously an annular thrust slider 48 which is arranged slidably coaxial around the channel 11 and on which the other end of the spring 25 rests and which pushes against the supporting slider 20. Advantageously, the thrust slider 48 is visible through at least one suitable window 49 on the side wall of the housing of the centering device so that, looking at the advanced or retracted position of the thrust slider through the window 49, the open jaws condition (slider advanced) or closed jaws condition (slider retracted) is clear from the outside. The window 49 for this purpose is advantageously in the form of a hole elongated in the direction of sliding of the slider.

The supporting slider 20 may move between a first retracted position (shown in Figure 1), closer to the inlet end 15, in which the jaws are constrained close to the channel axis, and a second advanced position, closer to the outlet end 16, in which the jaws are, or may be pushed, into a position where they have a greater radial opening.

The rotation of the slider may be avoided with the cams which are slidably received inside the longitudinal grooves 32. However, in addition, or alternatively, in order to ensure that the slider 20 may not be rotated axially inside housing 43, guide elements 30 may also be provided along the inner walls of the housing, said guide elements being slidably received inside matching grooves 31 present in the peripheral wall of the slider 20. For the sliding movement, the guides 30 and the grooves 31 are parallel to the cams 23 and to the sliding axis 12 of the slider 20.

Advantageously the grooves 31 are arranged angularly equidistant around the sliding axis of the slider 20 and arranged in between the seats 19 which receive the jaws 17. The slider 20 therefore acquires a configuration which, when viewed cross-sectioned relative to the axis, may be defined as being a "star" configuration.

As can also be clearly seen in Figure 3 (where, for the sake of simplicity, only the slider 20 and only one jaw 17 with associated cam 23 are shown in exploded form), the surface 21 of each jaw is advantageously slightly inset in the jaw so as to define a channel for sliding of the corresponding cam 23 and has preferably the end of the channel which is directed towards the inlet 15 of the centering device, with an initial leading surface 24 inclined towards the axis of the centering device. The cam 23 has preferably a corresponding chamfered terminal end 26 which is inclined relative to the axis of the centering device and which is directed towards the outlet 16 of the centering device.

The channel-like design of the surface 21 of the jaw which slides on the cam may advantageously oppose a rotation of the jaw inside the respective seat.

It has also been found to be advantageous to form in the jaw a groove 27 extending in the direction of radial sliding of the jaw with the closed end towards the rear part of the jaw (i.e. the actuating surface 21) and open end towards the front part (i.e. towards the axis of the channel). A pin 28 (for example the end of a screw), visible for example in Figure 1, slidably engages inside this groove 27. This forms an end-of-travel stop for the advancing movement of the jaw towards the channel axis. Moreover, it may also allow precise mounting of the jaws inside the slider before the slider is inserted inside the housing.

Advantageously, the operative surface 18 of each jaw has an inclined plane 29 which faces the direction of entry of the bars into the centering device so as to form a cam surface on which the gripper of the bar pusher acts when it enters into the channel 11, so as to move the slider forwards, against the action of the spring 25, and produce at the same time a thrust component on the jaws in the radial direction towards the outside of the channel 11. The jaws may this retract from the channel 11 owing to their simultaneous sliding action along the cams 23 into a zone of the cams which has a smaller radial thickness, as will be clarified below.

In particular, if the inclined surfaces 24 and 26 of jaw and cam are present, then the radial retracting movement of the jaws from the channel 11 may start when these inclined surfaces start to slide on each other. The presence of the inclined surfaces 24 and 26 also assists the opposite movement of the jaws when the supporting slider 20, pushed by the spring 25, returns into its operative starting position after the bar pusher has been retracted again towards the loader.

Basically, when the centering device is in its normal operating position shown in Figure 1, the slider 20 is in its first retracted operative position and the jaws may radially rest against the respective cams in the position where these cams have their greatest radial thickness so as not to be able to move radially away from each other by more than that determined by the cams. In this condition the jaws, with their operative surfaces 18, define with precision the through-aperture for the bar inside the channel 11.

The jaws may instead move radially away from the axis 12 if a thrust against the jaws in the direction of the axis 12 pushes them (against the reaction of the elastic means 25 and together with the supporting slider 20) towards the outlet end 16 of the centering device until they reach the position where the respective cams terminate or have a suitable smallest radial thickness. The radial spacing movement is established so that the operative surfaces of the jaws define inside the channel 11 an aperture at least sufficient to allow the passage of the bar pusher of the loader.

In Figure 1 it can be clearly seen how the housing 43 of the centering device is advantageously closed at its end towards the inlet end 15 by means of a closing element 50 which has a central passage around the channel and which is connected removably onto the housing via suitable fixing means which can be disengaged so as to allow removal thereof and subsequent extraction of the slider 20 from the housing.

The means for fixing together the housing and the closing element may be for example removable screws, or other known systems, but it is preferable for them to be of the snap-engaging, for example spring-loaded, type.

Advantageously, the closing element 50 may also be an element for supporting the centering device on the loader and a quick separation mode is therefore preferable.

The separation of the closing element from the rest of the centering device allows in this case the body of the centering device to be rapidly removed from the loader, for example for maintenance thereof and/or for replacement of the jaws because they are worn or in order to change them when there is a change in shape or diameter of the bars being fed.

In particular, as can be clearly seen for example in the exploded view of Figure 5, the fixing means may be advantageously realized so as to comprise at least one engaging element 51 (three elements in the example of embodiment, arranged equidistant around the axis 12) which is pushed with a spring 52 towards the outside of the housing 43 so as to project from the side surface of the housing through a hole 53 and engage elastically inside a corresponding hole 54 present in a side wall of the closing element 50 which is cup-shaped so as to receive partially a rear end of the housing 43 with minimum lateral play. The engaging elements with the associated springs may be advantageously received inside suitable radial seats formed in the guide elements 30 which are fixed by means of screws to the inner wall of the housing.

In this way, the closing element is snap-engaged onto the housing 43 and a simple pressure applied onto the engaging elements 51 so as to push them inwards (applied for example manually) allows them to be disengaged from the holes 54 and the closing element to be separated from the housing 43.

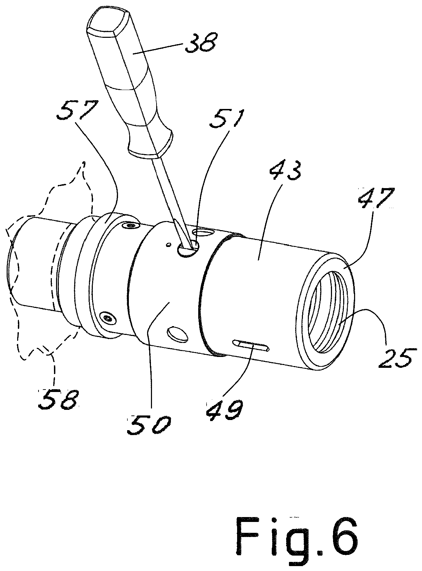

Advantageously it may also be preferably envisaged that the spring-loaded engaging elements 51 are axially rotatable (for example by means of a screwdriver 38, as shown in Figure 6, which engages inside a special slot in the head of the engaging element) so as to displace them between a first angular position, in which they elastically project from the holes 53, and a second angular position, where they are kept stably retracted inside the housing. This may be particularly useful if several spring-loaded engaging elements are provided around the circumference of the centering device and/or the centering device has a diameter which is too large for it be easily extracted while keeping the fingers of one hand pressed on the engaging elements. It is thus possible to operate one engaging element at a time so as to lock them in their stable retracted position and then remove the centering device from the closing element 50.

In order to obtain the stable retracted position, the engaging elements (as can be seen again in Figure 5) may be shaped (for example with two opposite lateral grooves on their head) so that the head is narrower than the openings 53 in the first angular position and may thus project elastically from the openings and is instead wider than these openings 53 in the second angular position and may thus remain inside the openings without projecting from them once the insert has been pressed and rotated.

Advantageously, in order to realize the supporting function by means of the closing element, it is envisaged that the closing element may comprise a hollow shank 55 extending coaxial with the channel in the opposite direction to the housing 43. A fixing bush 57 is mounted on this shank 55, via rolling means 56 (for example bearings), said bush being intended for mounting the centering device between loader (indicated by 58 in Figure 1) and lathe. In this way, the entire centering device is freely rotatable about the axis 12 and if necessary may therefore follow rapid rotation of the bar machined by the lathe.

A ferrule 62 may be for example advantageously provided for rotatable mounting between the element 50 and the fixing bush 57, said ferrule being screwed onto the (threaded) end of the shank 55 so as to compact the ball bearings 56 via an inner stop ring 63 and an outer stop ring 64. This assembly is then inserted into the bush 57 and fixed in position by means of radial screws 61 which engage inside threaded seats of the outermost ring 64.

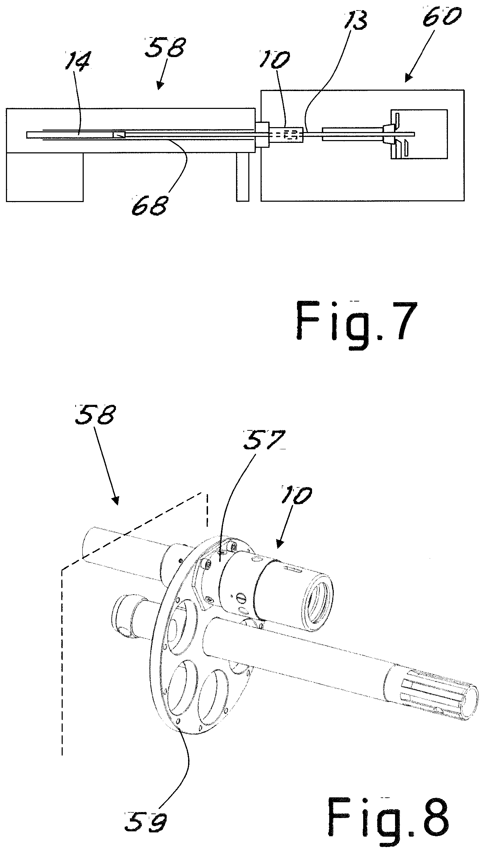

Obviously, the fixing bush 57 may have forms and fixing systems different from those shown in the Figure, for example depending on the lathe and the loader onto which it is to be fixed, as may be easily imagined by the person skilled in the art. Figure 8 shows an example of this. The supporting and closing functions of the centering device may in any case also be separated, as may be now easily imagined by the person skilled in the art, for example by fitting a flat annular lid onto the end of the housing which is to be closed and then mounting the entire assembly on a rotatable support which may also be similar to the element 50 shown in the figures.

As schematically shown in Figure 7, the centering device 10 may be mounted on the end of an automatic loader 58 so as to be aligned with the channel 68 of the loader which feeds the bars 13 towards the lathe 60 by means of the bar pusher 14 which is suitably motor-driven.

The loader and the lathe are known per se and will not be further described or shown here, these being able to be easily imagined by the person skilled in the art. For example, the loader will be provided with a suitable known magazine for sequential removal of the bars to be loaded into the bar pusher(s) 14. The lathe may be of the single-spindle or multiple-spindle type and the loader may also be designed to feed one or more bars simultaneously. In the case of a multiple loader, centering devices 10 will be used at each outlet of the loader.

Figure 8 shows for example in schematic form a head part of a multiple loader for rotation of a plurality of centering devices (for simplicity only one is shown in the Figure) in synchronism with rotation of the bars of the loader. This head part comprises a disc 59 which axially rotates together with the spindles of the lathe and the guides of the loader and which has seats for mounting the centering devices (via the suitably shaped ferrule 57) arranged circumferentially on the disc so as to feed a plurality of bars in a guided manner to the lathe.

At this point it is clear how the predefined objects have been achieved.

Owing to the centering device according to the invention, the bars may be conveniently centered and supported along a section of their length so as to not transmit damaging vibrations to the lathe.

Moreover, owing to the structure and movement of the jaws, varying types and diameters of bars may be always suitably seated and supported in the centering device. In particular, a centering device according to the invention has been found to be advantageously usable also with bars which have a relatively large diameter, for example even greater than two thirds of the diameter of the loader channel. By choosing the length of the jaws between the operative head surface and opposite actuating surface 21, it is possible for the channel 11 to contain also bars with a transverse dimension similar to the transverse dimension of the channel itself.

For example for a loader with a channel having a diameter 30, the centering device may have jaws suitable for processing also bars with a diameter greater than 20 (or hexagonal socket greater than 20). In any case, smaller diameters may also be processed by providing the jaws with suitable dimensions. Moreover, it is possible to process also bars with a square or more complex cross-section.

In general, for each diameter (or polygonal socket) it is possible use specific jaws which can be easily replaced and which ensure, for example, not more than about 0.5 mm of air between jaws and bar. In the event of round bars it is also possible to use slightly wider jaws, while in the case of polygonal (for example hexagonal) bars it is preferable for the fit to be relatively precise so as to ensure that the centering device is rotated by the polygonal bar and prevent rapid wear of the jaws due to the presence of the edges on the polygonal bar.

Basically, the bar centering device according to invention is able to ensure in an efficient and flexible manner a limitation of the range of possible oscillation of the fed bar, but at the same time, when the bar is shortened, it does not form an obstacle for the advancing movement of the bar pusher, which usually has a diameter equal to the diameter of the channel in the loader and therefore necessarily larger than the diameter of the bar itself. Adaptation for the passage of the bar pusher is advantageously performed in a completely automatic manner and without the need for external actuating devices, as instead required by most of the centering devices according to the prior art.

The jaws may also be rapidly and easily replaced, for example so as to adapt the passage between the jaws to different types of bar and thus keep the bar perfectly supported.

Once the body of the centering device has been released from the closing element, the slider with the jaws may easily slide axially so as to be extracted out of the centering device, and the jaws extracted radially from their seats so that they can be inspected and if necessary replaced. In the preferred case of engaging means which involve the snap-engagement of the body of the centering device onto the support fixed to the loader, rapid disassembly and reassembly with minimum or no use of tools is also achieved.

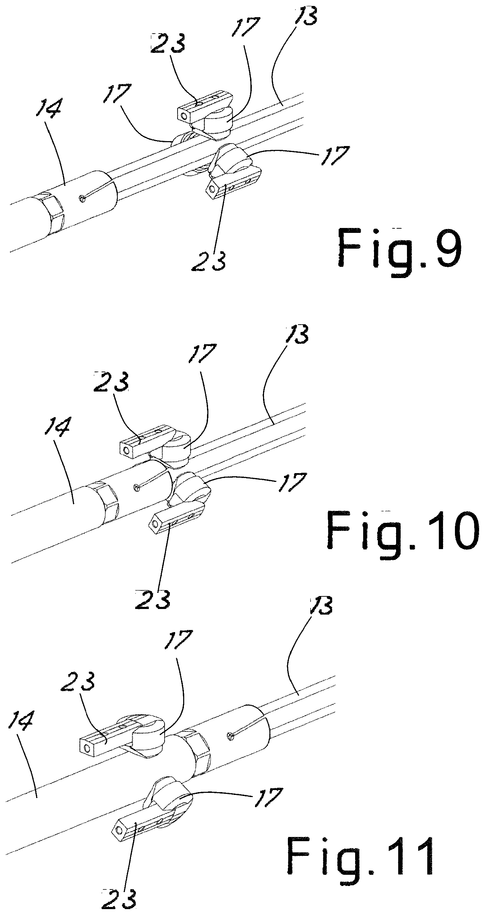

By way of example, Figures 9, 10 and 11 schematically illustrate operation of the centering device with the relative position of jaws and corresponding cams in the various conditions. For the sake of clarity in the figures only the jaws and the associated cams can be seen, while the remainder of the centering device has been omitted from the drawing.

Figure 9 shows the normal operative position of the jaws, namely when the centering device is normally passed through by a bar to be radially supported. The jaws, together with the bar between them, therefore project more along the initial section of the cams, this thus forming an end-of-travel stop for their radial movement, and they may not therefore move radially away from each other beyond the predefined radial position. The bar is thus guided with a minimum amount of lateral play.

Figure 10 shows the bar pusher 14 which has engaged inside the centering device and starts to push axially against the jaws, thus pushing them forwards together with the supporting slider 20 and against the action of the spring 25.

When the jaws reach the part of the cams which project by a smaller amount, they may finally move radially (advantageously the inclined surfaces 24 and 26 of the jaw and cam start to slide on each other) and this allows the bar pusher to pass between the open jaws (Figure 11). Once the bar has passed through completely, the bar pusher will move back leaving the jaws free to return into the operative position, with the supporting slider which is pushed by the spring and ready to receive a new bar. When a new bar is introduced into the centering device the jaws, if they not already positioned against the cams which act as end-of-travel stops, are radially pushed against the cams and the bar is thus stably supported radially.

The present invention is described by way of example only and the description must therefore not be regarded as limiting the scope of the invention as defined by the claims herein. For example, depending on the specific practical requirements, the dimensions and the proportions of the various parts of the centering device may vary with respect to that shown. Depending on the specific trajectory required for the jaws, the cams for the movement of the jaws may also be different from those shown.

The materials used for manufacture of the various parts may also vary depending on the specific practical requirements, even though it has been found to be advantageous to make the cylindrical housing of the centering device and the jaws from plastic and the closing element, which forms the element for supporting the centering device, and the associated bush with the bearings, from metal. The guide elements, the supporting slider and the cams may also be made of plastic suitable for sliding of the sliders and the jaws with a small amount of friction.

## Claims

1. Centering device (10) intended for use in an automatic bar loader for a lathe, comprising a channel (11) with a rectilinear axis (12) intended for the passage of a bar from the loader to the lathe and with an inlet end (15) for the bar and an opposite outlet end (16) allowing the bar to exit towards the lathe, comprising mobile jaws (17) on the sides of the channel (11) for defining an adjustable through-aperture in the channel,
wherein the jaws (17) are mounted in a supporting slider (20) of the centering device (10) so as to be slidable in the supporting slider (20) radially relative to the channel (11),
**characterized in that** the centering device is configured such that the supporting slider (20) is slidable along the channel (11) against the action of elastic means (25) of the centering device (10) in response to a thrust against the jaws towards said outlet end (16), so as to move between a first position closer to the inlet end (15), in which the jaws are in a first position projecting into the channel with their operative surfaces (18), and a second position closer to the outlet end (16), in which the jaws can slide inside the supporting slider so as to move radially away from said first position projecting into the channel.

2. Centering device according to claim 1, **characterized in that** the operative surface (18) of the jaws is provided with an inclined plane (29) which faces the direction of entry of the bars into the centering device and is intended to receive the thrust of a bar pusher that enters the channel (11) so as to cause the movement of the slider towards the second position and at the same time produce a thrust component on the jaws (17) in the radial direction towards the outside of the channel (11).

3. Centering device according to claim 1, **characterized in that**, during the movement of the supporting slider (20) between first and second positions, the jaws (17) run with their actuating surface (21), opposite to their operative surface (18), along cams (23) for positioning the jaws in the radial direction.

4. Centering device according to claim 3, **characterized in that** in the first position of the slider the jaws (17) have their actuating surface opposite a portion of the cams (23) which prevents their mutual spacing in the radial direction beyond a predetermined radial position.

5. Centering device according to claim 1, **characterized in that** the jaws are three in number, arranged circumferentially equidistant around the axis of the channel.

6. Centering device according to claim 1, **characterized in that** the elastic means (25) comprise a helical spring arranged around the channel (11)

7. Centering device according to claim 1, **characterized in that** it comprises an outer housing (43) which extends along the axis of the channel (11) and inside which the supporting slider (20) slides, one end of the housing towards the said inlet end (15) carrying a closing element (50) which has a central passage around the channel (11) and which is connected removably on the housing by means of disengageable fixing means (51, 54).

8. Centering device according to claims 6 and 7, **characterized in that** towards the outlet end (16) for the bar, the housing (43) comprises a peripheral edge (47) which is directed towards the channel axis (11) and on the which a first end of the helical spring (25) rests, and the housing contains an annular thrust slider (48), which is arranged coaxial to the channel and on which the other end of the helical spring (25) rests so as to push the supporting slider (23) towards said first position.

9. Centering device according to claim 7, **characterized in that** the fixing means (51, 54) comprise at least one engaging element (51) which is spring-biased towards the outside of the housing (43) so as to protrude from a side surface of the housing and engage elastically inside a hole (54) in a wall of the closing element (50) which partially accommodates the housing (43) within itself.

10. Centering device according to claim 7, **characterized in that** the closing element (50) comprises a hollow shank (55) which extends coaxial to the channel in the opposite direction to the housing (43) and which supports, via rolling means (56), a bush (57) intended for axially rotatable mounting of the centering device.

11. Automatic loader (58) for feeding bars (13) to a lathe (60), comprising a centering device (10) which is mounted at end of a channel (68) of the loader which is intended to feed a bar (13) towards the lathe, **characterized in that** the centering device (10) is realized according to any one of the preceding claims so as to guide bars (13) pushed by a bar pusher (14) of the loader (58) along the channel (68) of the loader and allow the bar pusher to pass between the jaws (17) of the centering device (10) by means of a radial movement of the jaws (17) upon the axial thrust of the bar pusher (14) against the jaws (17).

## Patentansprüche

1. Zentriervorrichtung (10) zur Verwendung in einer automatischen Stangenladeeinrichtung für eine Drehmaschine, welche umfasst, einen Kanal (11) mit geradliniger Achse (12), der für den Durchgang einer Stange von der Ladeeinrichtung zu der Drehmaschine bestimmt ist, und ein Eingangsende (15) für die Stange und ein abgewandtes Ausgangsende (16), das den Austritt der Stange in Richtung der Drehmaschine ermöglicht, aufweist, und bewegliche Backen (17) an den Seiten des Kanals (11), um eine einstellbare Durchgangsöffnung in dem Kanal zu definieren, worin die Backen (17) in einem Gleitträger (20) der Zentriervorrichtung (10) montiert sind, so dass sie in dem Gleitträger (20) radial relativ zu dem Kanal (11) verschiebbar sind,
**dadurch gekennzeichnet, dass** die Zentriervorrichtung ausgestaltet ist, dass der Gleitträger (20) entlang des Kanals (11) gegen die Wirkung von elastischen Mitteln (25) der Zentriervorrichtung (10) als Reaktion auf einen Schub gegen die Backen in Richtung des Auslassendes (16) verschiebbar ist, um zwischen einer ersten Position näher am Einlassende (15), wobei sich die Backen in einer ersten Position befinden, bei der sie mit ihren wirksamen Oberflächen (18) in den Kanal hineinragen, und einer zweiten Position näher am Auslassende (16), bei der die Backen innerhalb des Gleitträgers gleiten können, bewegt zu werden, um sich radial von der ersten Position, die in den Kanal hineinragt, wegzubewegen.

2. Zentriervorrichtung nach Anspruch 1, **dadurch gekennzeichnet, dass** die Arbeitsfläche (18) der Backen mit einer schrägen Ebene (29) versehen ist, die der Eintrittsrichtung der Stangen in die Zentriervorrichtung zugewandt und dazu bestimmt ist, den Schub eines Stangenschiebers, der in den Kanal (11) eintritt, aufzunehmen, um die Bewegung des Schiebers in die zweiten Position zu bewirken und gleichzeitig eine Schubkomponente auf die Backen (17) in radialer Richtung zur Außenseite des Kanals (11) zu erzeugen.

3. Zentriervorrichtung nach Anspruch 1, **dadurch gekennzeichnet, dass** die Backen (17) während der Bewegung des Gleitträgers (20) zwischen der ersten und der zweiten Position mit ihrer Betätigungsfläche (21), die von ihrer Arbeitsfläche (18) abgewandt ist, entlang der Nocken (23) laufen, um die Backen in radialer Richtung zu positionieren.

4. Zentriervorrichtung nach Anspruch 3, **dadurch gekennzeichnet, dass** in der ersten Position des Schiebers die Backen (17) mit ihrer Betätigungsfläche einem Abschnitt der Nocken (23) gegenüberliegen, der ihre gegenseitige Beabstandung in radialer Richtung über eine bestimmte radiale Position hinaus verhindert.

5. Zentriervorrichtung nach Anspruch 1, **dadurch gekennzeichnet, dass** 3 Backen vorgesehen sind, die in Umfangsrichtung in gleichem Abstand um die Achse des Kanals angeordnet sind.

6. Zentriervorrichtung nach Anspruch 1, **dadurch gekennzeichnet, dass** die elastischen Mittel (25) eine um den Kanal (11) angeordnete Schraubenfeder umfassen.

7. Zentriervorrichtung nach Anspruch 1, **dadurch gekennzeichnet, dass** sie ein äußeres Gehäuse (43) umfasst, das sich entlang der Achse des Kanals (11) erstreckt und in dem der Gleitträger (20) gleitet, worin ein Ende des Gehäuses in Richtung des Eingangsendes (15) ein Verschlusselement (50) trägt, das einen zentralen Durchgang um den Kanal (11) herum aufweist und das mittels auskuppelbarer Befestigungsmittel (51, 54) an dem Gehäuse abnehmbar angebracht ist.

8. Zentriervorrichtung nach Anspruch 6 und 7, **dadurch gekennzeichnet, dass** das Gehäuse (43) für die Stange zum Auslassende (16) hin einen Umfangsrand (47) aufweist, der auf die Kanalachse (11) ausgerichtet ist und auf dem ein erstes Ende der Schraubenfeder (25) ruht, und dass das Gehäuse einen ringförmigen Druckschieber (48) aufweist, der koaxial zum Kanal angeordnet ist und auf dem das andere Ende der Schraubenfeder (25) ruht, um den Gleitträger (23) in die erste Position zu drücken.

9. Zentriervorrichtung nach Anspruch 7, **dadurch gekennzeichnet, dass** die Befestigungsmittel (51, 54) mindestens ein Eingriffselement (51) umfassen, das zur Außenseite des Gehäuses (43) hin vorgespannt ist, so dass es von einer Seitenfläche des Gehäuses vorsteht und elastisch in ein Loch (54) in einer Wand des Verschlußelements (50) eingreift, das das Gehäuse (43) teilweise in sich aufnimmt.

10. Zentriervorrichtung nach Anspruch 7, **dadurch gekennzeichnet, dass** das Verschlußelement (50) einen hohlen Schaft (55) aufweist, der sich koaxial zum Kanal in entgegengesetzter Richtung zum Gehäuse (43) erstreckt und der über Rollmittel (56) eine Buchse (57) trägt, die zur axial drehbaren Befestigung der Zentriervorrichtung bestimmt ist.

11. Automatischer Lader (58) zum Zuführen von Stangen (13) zu einer Drehmaschine (60), welcher umfasst, eine Zentriervorrichtung (10), die am Ende eines Kanals (68) des Laders angebracht ist, der dazu bestimmt ist, eine Stange (13) zur Drehmaschine zu führen, **dadurch gekennzeichnet, dass** die Zentriervorrichtung (10) nach einem der vorangehenden Ansprüche ausgestaltet ist, um Stangen (13), die von einem Stangenschieber (14) des Ladegeräts (58) geschoben werden, entlang des Kanals (68) des Ladegeräts zu führen und dem Stangenschieber zu ermöglichen, zwischen den Backen (17) der Zentriervorrichtung (10) mittels einer radialen Bewegung der Backen (17) auf den axialen Druck des Stangenschiebers (14) gegen die Backen (17) hin durchzulaufen.

## Revendications

1. Dispositif de centrage (10) prévu pour être utilisé dans un chargeur de barres automatique pour un tour, comprenant un canal (11) avec un axe rectiligne (12) prévu pour le passage d'une barre du chargeur au tour et avec une extrémité d'entrée (15) pour la barre et une extrémité de sortie (16) opposée permettant à la barre de sortir vers le tour, comprenant des mâchoires mobiles (17) sur les côtés du canal (11) pour définir une ouverture débouchante ajustable dans le canal,
dans lequel les mâchoires (17) sont montées dans une glissière de support (20) du dispositif de centrage (10) afin de pouvoir coulisser dans la glissière de support (20) radialement par rapport au canal (11),
**caractérisé en ce que** le dispositif de centrage est configuré de sorte que la glissière de support (20) peut coulisser le long du canal (11) contre l'action des moyens élastiques (25) du dispositif de centrage (10) en réponse à une poussée contre les mâchoires vers ladite extrémité de sortie (16), afin de se déplacer entre une première position plus proche de l'extrémité d'entrée (15), dans laquelle les mâchoires sont dans une première position en saillie dans le canal avec leurs surfaces opérationnelles (18), et une seconde position plus proche de l'extrémité de sortie (16), dans laquelle les mâchoires peuvent coulisser à l'intérieur de la glissière de support afin de se déplacer radialement à l'opposé de ladite première position en saillie dans le canal.

2. Dispositif de centrage selon la revendication 1, **caractérisé en ce que** la surface opérationnelle (18) des mâchoires est prévue avec un plan incliné (29) qui fait face à la direction d'entrée des barres dans le dispositif de centrage et est prévue pour recevoir la poussée d'un poussoir de barre qui entre dans le canal (11) afin de provoquer le déplacement de la glissière vers la seconde position et produire en même temps une composante de poussée sur les mâchoires (17) dans la direction radiale vers l'extérieur du canal (11).

3. Dispositif de centrage selon la revendication 1, **caractérisé en ce que**, pendant le déplacement de la glissière de support (20) entre les première et seconde positions, les mâchoires (17) circulent avec leur surface d'actionnement (21), opposée à leur surface opérationnelle (18), le long des cames (23) pour positionner les mâchoires dans la direction radiale.

4. Dispositif de centrage selon la revendication 3, **caractérisé en ce que** dans la première position de la glissière, les mâchoires (17) ont leur surface d'actionnement opposée à une partie des cames (23) qui empêche leur espacement mutuel dans la direction radiale au-delà d'une position radiale prédéterminée.

5. Dispositif de centrage selon la revendication 1, **caractérisé en ce que** les mâchoires sont au nombre de trois, agencées de manière circonférentielle à équidistance autour de l'axe du canal.

6. Dispositif de centrage selon la revendication 1, **caractérisé en ce que** les moyens élastiques (25) comprennent un ressort hélicoïdal agencé autour du canal (11).

7. Dispositif de centrage selon la revendication 1, **caractérisé en ce qu'**il comprend un boîtier externe (43) qui s'étend le long de l'axe du canal (11) et à l'intérieur duquel, la glissière de support (20) coulisse, une extrémité du boîtier vers ladite extrémité d'entrée (15) portant un élément de fermeture (50) qui a un passage central autour du canal (11) et qui est raccordé, de manière amovible, sur le boîtier, au moyen de moyens de fixation pouvant être dégagés (51, 54).

8. Dispositif de centrage selon les revendications 6 et 7, **caractérisé en ce que** vers l'extrémité de sortie (16) pour la barre, le boîtier (43) comprend un bord périphérique (47) qui est dirigé vers l'axe de canal (11) et sur lequel, une première extrémité du ressort hélicoïdal (25) repose, et le boîtier contient une glissière de poussée annulaire (48) qui est agencée de manière coaxiale par rapport au canal et sur laquelle, l'autre extrémité du ressort hélicoïdal (25) repose afin de pousser la glissière de support (23) vers ladite première position.

9. Dispositif de centrage selon la revendication 7, **caractérisé en ce que** les moyens de fixation (51, 54) comprennent au moins un élément de mise en prise (51) qui est sollicité par ressort vers l'extérieur du boîtier (43) afin de faire saillie d'une surface latérale du boîtier et se mettre en prise élastiquement à l'intérieur d'un trou (54) dans une paroi de l'élément de fermeture (50) qui loge partiellement le boîtier (43) à l'intérieur de ce dernier.

10. Dispositif de centrage selon la revendication 7, **caractérisé en ce que** l'élément de fermeture (50) comprend une tige creuse (55) qui s'étend de manière coaxiale par rapport au canal dans la direction opposée au boîtier (43) et qui supporte, via des moyens de roulement (56), une douille (57) prévue pour le montage par rotation axiale du dispositif de centrage.

11. Chargeur automatique (58) pour amener des barres (13) à un tour (60), comprenant un dispositif de centrage (10) qui est monté à une extrémité d'un canal (68) du chargeur qui est prévu pour amener une barre (13) vers le tour, **caractérisé en ce que** le dispositif de centrage (10) est réalisé selon l'une quelconque des revendications précédentes afin de guider des barres (13) poussées par un poussoir de barre (14) du chargeur (58) le long du canal (68) du chargeur et permettre au poussoir de barre de passer entre les mâchoires (17) du dispositif de centrage (10) au moyen d'un mouvement radial des mâchoires (17) suite à la poussée axiale du poussoir de barre (14) contre les mâchoires (17).
